# EUROPEAN PATENT APPLICATION

(11) **EP 4 395 340 A1**
(43) Date of publication of application: **03.07.2024**
(21) Application number: 23740426.4
(22) Date of filing: 10.01.2023
(51) Int. Cl.: H04N 21/4788, H04N 21/258, H04L 41/50

(54) **DISPLAY DEVICE AND OPERATION METHOD THEREOF**

(30) Priority: 13.01.2022 KR 20220005337
(71) Applicant: Samsung Electronics Co., Ltd., Suwon-si, Gyeonggi-do 16677 (KR)
(72) Inventor: KIM, Jieun, Suwon-si, Gyeonggi-do 16677 (KR); KIM, Jinhong, Suwon-si, Gyeonggi-do 16677 (KR); KIM, Chansung, Suwon-si, Gyeonggi-do 16677 (KR); PARK, Yeseul, Suwon-si, Gyeonggi-do 16677 (KR); OH, Seokjae, Suwon-si, Gyeonggi-do 16677 (KR); YUN, Byoungho, Suwon-si, Gyeonggi-do 16677 (KR); LEE, Seunghoon, Suwon-si, Gyeonggi-do 16677 (KR); JEON, Yuseong, Suwon-si, Gyeonggi-do 16677 (KR); JEON, Eunsang, Suwon-si, Gyeonggi-do 16677 (KR)
(74) Representative: Appleyard Lees IP LLP
(86) International application number: PCT/KR2023/000431
(87) International publication number: WO 2023/136582

(57) **Abstract**

Provided are a display apparatus and a method for providing a chat service for video content. A processor of the display apparatus receives video content. In response to requesting a chat room corresponding to the video content based on a user account, the processor receives chat messages and displays the received chat messages of the first chat room together with the video content on the display screen. In response to a chat room to which the user account belongs being changed from the first chat room to a second chat room based on an amount of chat messages of the user account transmitted to the chat server, the processor receives chat messages of the second chat room from the chat server, and displays the received chat messages of the second chat room through the display screen.

## Description

### Technical Field

The disclosure relates to a display apparatus and a method thereof. Particularly, the disclosure relates to a method of providing a chat service for video content (e.g., broadcast content) and a display apparatus for providing the chat service.

### Background Art

Recently, as multimedia and network technology has developed, the number of applications for sharing particular interests or activities between persons has increased.

For example, because video content (e.g., broadcast content, such as TV dramas, movies, or animations provided by service providers) is simultaneously transmitted to a plurality of users, sometimes, in real time, there is an increasing demand for sharing opinions or feelings between persons watching the same video content (e.g., broadcast content). Throughout the present disclosure, the broadcast content is used as an example of the video content.

However, in a case of popular broadcast content, because there is a concern that chat messages of viewers will increase excessively during the content is broadcasted or streamed, it is necessary to adjust a chat room to provide a smooth chat service.

### Disclosure

### Technical Problem

Embodiments of the disclosure provide a display apparatus capable of adjusting a chat room to provide a smooth chat service when providing a chat service for broadcast content, and a method thereof.

### Technical Solution

According to an aspect of an embodiment of the disclosure, a display apparatus includes: a display screen; a memory storing one or more instructions; and a processor configured to execute the one or more instructions stored in the memory. The processor receives video content. In response to requesting a chat room corresponding to the video content based on a user account, the processor receives chat messages of a first chat room corresponding to the video content from a chat server, and displays the received chat messages of the first chat room together with the video content on the display screen. In response to a chat room to which the user account belongs being changed from the first chat room to a second chat room based on an amount of chat messages of the user account transmitted to the chat server, the processor receives chat messages of the second chat room from the chat server, and displays the received chat messages of the second chat room through the display screen.

According to an aspect of an embodiment of the disclosure, a method of providing a chat service for video content includes: receiving video content; in response to requesting a chat room corresponding to the video content from a chat server based on a user account, receiving chat messages of a first chat room corresponding to the video content from the chat server; displaying the received chat messages of the first chat room together with the video content; in response to a chat room to which the user account belongs being changed from the first chat room to a second chat room based on an amount of chat messages of the user account transmitted to the chat server, receiving chat messages of the second chat room from the chat server; and displaying the received chat messages of the second chat room.

According to an aspect of an embodiment of the disclosure, a method performed by a chat server includes: determining a chat rate range of a first chat room based on information of video content and information of users of the first chat room; adding a second chat room based on a comparison of a chat rate of the first chat room with the determined chat rate range; determining to distribute users of the first chat room to the second chat room based on the chat rate of the first chat room; and moving the users of the first chat room to the second chat room. In the method, the second room is added based on the comparison of the chat rate of the first chat room with the determined chat rate range indicating that the chat rate of the first chat room is greater than the determined chat rate range. In the method, the second room is added based on the comparison of the chat rate of the first chat room with the determined chat rate range indicating that the chat rate of the first chat room is below the determined chat rate range.

According to an aspect of an embodiment of the disclosure, a chat server includes: a memory storing one or more instructions; and at least one processor configured to execute the one or more instructions stored in the memory to: determine a chat rate range of a first chat room based on information of video content and information of users of the first chat room, add a second chat room based on a comparison of a chat rate of the first chat room with the determined chat rate range, determine to distribute users of the first chat room to the second chat room based on the chat rate of the first chat room, and move the users of the first chat room to the second chat room. In the chat server, the comparison of the chat rate of the first chat room with the determined chat rate range indicates that the chat rate of the first chat room is greater than the determined chat rate range. In the chat server, the comparison of the chat rate of the first chat room with the determined chat rate range indicates that the chat rate of the first chat room is below the determined chat rate range.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a method by which a display apparatus provides a chat service for broadcast content, according to an embodiment of the disclosure;
FIG. 2 illustrates a method by which a display apparatus provides a chat service for broadcast content, according to an embodiment of the disclosure;
FIG. 3 illustrates a method by which a chat server divides a chat room, according to an embodiment of the disclosure;
FIG. 4 illustrates a method by which a chat server divides a chat room, according to an embodiment of the disclosure;
FIG. 5 illustrates a method by which a chat server merges a plurality of chat rooms, according to an embodiment of the disclosure;
FIG. 6 illustrates a method by which a chat server merges a plurality of chat rooms, according to an embodiment of the disclosure;
FIG. 7 illustrates a method by which a display apparatus provides a user interface for selecting an interesting friend (i.e., a friend of interest), according to an embodiment of the disclosure;
FIG. 8 illustrates a method by which a display apparatus provides a user interface for changing a user's chat room to the user's friend's chat room, according to an embodiment of the disclosure;
FIG. 9 illustrates a method by which a display apparatus provides a user interface for selecting a chat room, according to an embodiment of the disclosure;
FIG. 10 illustrates a method by which a display apparatus provides a user interface for generating a chat room, according to an embodiment of the disclosure;
FIG. 11 illustrates a method by which a display apparatus provides an authentication code, according to an embodiment of the disclosure;
FIG. 12 illustrates a method by which a display apparatus provides an authentication code, according to an embodiment of the disclosure;
FIG. 13 is a block diagram of a display apparatus according to an embodiment of the disclosure;
FIG. 14 is a block diagram of a display apparatus according to another embodiment of the disclosure; and
FIG. 15 is a block diagram of a chat server according to an embodiment of the disclosure.

### DETAILED DESCRIPTION

Throughout the disclosure, the expression "at least one of a, b or c" indicates only a, only b, only c, both a and b, both a and c, both b and c, all of a, b, and c, or variations thereof.

Hereinafter, embodiments of the disclosure will be described in detail with reference to the accompanying drawings so that those of ordinary skill in the art may easily implement the embodiments of the disclosure. However, the disclosure may be embodied in many different forms and should not be construed as being limited to the embodiments set forth herein. Also, portions irrelevant to the description of the disclosure will be omitted in the drawings for a clear description of the disclosure, and like reference numerals will denote like elements throughout the specification.

The terms used herein are those general terms currently used in the art in consideration of functions in the disclosure, but the terms may vary according to the intentions of those of ordinary skill in the art, precedents, or new technology in the art. Thus, the terms used herein should be understood not as simple names but based on the meanings of the terms and the overall description of the disclosure.

Although terms such as "first" and "second" may be used herein to describe various elements or components, these elements or components should not be limited by these terms. These terms are used to distinguish one element from another element.

Also, the terms used herein are only used to describe particular embodiments and are not intended to limit the disclosure. As used herein, the singular forms "a", "an", and "the" are intended to include the plural forms as well, unless the context clearly indicates otherwise. Also, throughout the specification, when an element is referred to as being "connected" to another element, it may be "directly connected" to the other element or may be "electrically connected" to the other element with one or more intervening elements therebetween. Also, when something is referred to as "including" a component, another component may be further included unless specified otherwise.

Phrases such as "in some embodiments" or "in an embodiment" appearing in various places in the specification do not necessarily all refer to the same embodiment.

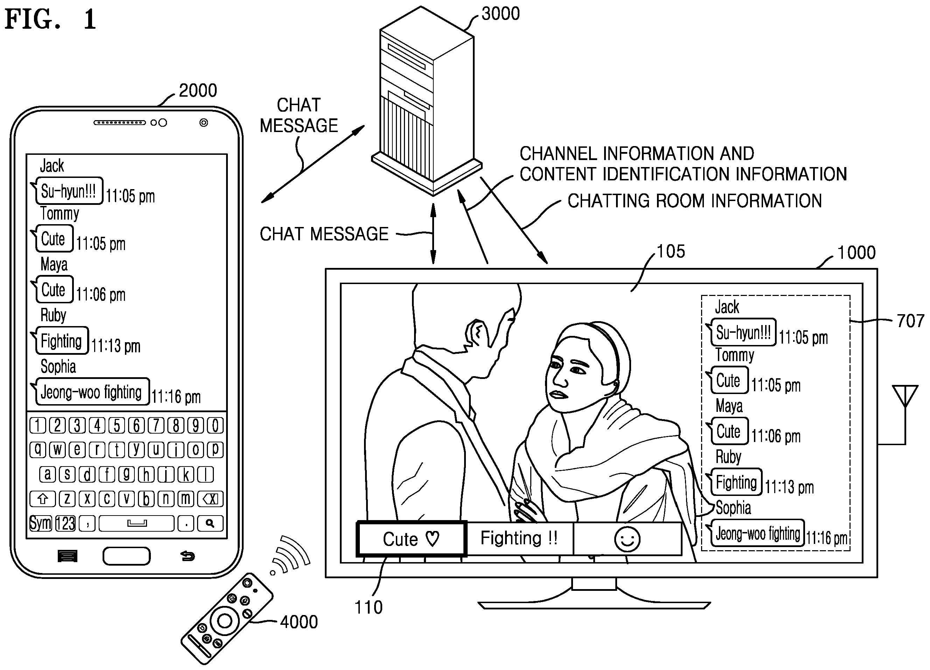

FIG. 1 illustrates a method by which a display apparatus 1000 provides a chat service for broadcast content, according to an embodiment of the disclosure.

Referring to FIG. 1, according to an embodiment of the disclosure, a system for providing a chat service for broadcast content may include a display apparatus 1000, a mobile device 2000, and a chat server 3000.

According to an embodiment of the disclosure, the display apparatus 1000 may provide broadcast content of a real-time (or live) broadcast channel and a chat service for the broadcast content.

According to an embodiment of the disclosure, the display apparatus 1000 may transmit channel information and content identification information of real-time broadcast content displayed to the chat server 3000 and receive chat room information corresponding to broadcast content from the chat server 3000. The display apparatus 1000 may display, together with broadcast content 105 of real-time broadcast channel, a chat window 707 of a chat room for the broadcast content 105.

According to an embodiment of the disclosure, the display apparatus 1000 may receive chat messages and chat room information of a chat room from the chat server 3000 and display the received chat messages and chat room information. Also, the display apparatus 1000 may receive a user input for inputting a chat message and transmit the input chat message to the chat server 3000.

According to an embodiment of the disclosure, the display apparatus 1000 may receive broadcast content of a real-time broadcast channel through a broadcast receiver of the display apparatus 1000. The broadcast receiver may include, but is not limited to, an input/output unit (e.g., an HDMI port) and a tuner connected to an external source device such as a set top box to receive broadcast content of a real-time broadcast channel from the external source device.

According to an embodiment of the disclosure, the display apparatus 1000 may receive broadcast content data of a real-time broadcast channel transmitted by a broadcast content server through the broadcast receiver. The broadcast content server may simultaneously transmit the same broadcast content data to devices requesting broadcast content of a real-time broadcast channel.

According to an embodiment of the disclosure, in response to a chat room of the user being changed, the display apparatus 1000 may receive chat messages of a changed chat room from the chat server 3000.

Also, according to an embodiment of the disclosure, the display apparatus 1000 may provide a user interface for selecting one of users belonging to a chat room as an interesting person (i.e., a person of interest) and moving the chat room along with the interesting person.

Also, according to an embodiment of the disclosure, the display apparatus 1000 may display keywords and chat rates of a plurality of chat rooms and may provide, when selecting one of the plurality of chat rooms, a user interface for moving the user to the selected chat room.

Also, according to an embodiment of the disclosure, the display apparatus 1000 may provide, in response to receiving a list of friends corresponding to a user account of the user from the chat server 3000 and receiving a user input for selecting one of the friends, a user interface for moving the user to a chat room of the selected friend.

Also, according to an embodiment of the disclosure, the display apparatus 1000 may provide a user interface for opening a dedicated (or private) chat room requiring authentication information.

Also, according to an embodiment of the disclosure, the display apparatus 1000 may receive an authentication code corresponding to a chat room from the chat server 3000 and display the received authentication code.

Also, according to an embodiment of the disclosure, the display apparatus 1000 may provide a preset text 110 that may be selected as a chat message. In response to receiving a user input for selecting a preset text menu, the display apparatus 1000 may display a plurality of pre-stored preset texts 110. In response to receiving a user input for selecting one of a plurality of displayed preset texts 110 through a remote controller 4000, the display apparatus 1000 may transmit the selected preset text as a chat message of the chat room to the chat server 3000. Accordingly, the user may easily and quickly input a chat message into the display apparatus 1000 by simply operating a button on the remote controller 4000.

According to an embodiment of the disclosure, in response to receiving a chat room request corresponding to the broadcast content 105 of the real-time broadcast channel from the display apparatus 1000, the chat server 3000 may provide the chat room information of the chat room corresponding to the broadcast content 105 and the chat messages of the chat room to the display apparatus 1000. Also, in order to provide a smooth chat service through the chat room, the chat server 3000 may adjust the chat room by various methods such as by dividing the chat room or merging the chat rooms.

Also, according to an embodiment of the disclosure, the chat server 3000 may store the chat room information corresponding to the identification information of the broadcast content of the real-time broadcast channel. The chat room information may include, but is not limited to, the identification information of the chat room, the user account information belonging to the chat room, the device address information corresponding to the user account belonging to the chat room, the channel information corresponding to the chat room, and the broadcast content information corresponding to the chat room.

Also, according to an embodiment of the disclosure, in response to receiving a request for the chat room corresponding to the broadcast content of the real-time broadcast channel from the display apparatus 1000, the chat server 3000 may transmit the chat room information of the chat room corresponding to the broadcast content to the display apparatus 1000.

According to an embodiment of the disclosure, the chat server 3000 may provide the chat room for the real-time broadcast channel instead of the broadcast content of the real-time broadcast channel. In this case, in response to receiving a request for the chat room corresponding to the real-time broadcast channel together with the identification information of the real-time broadcast channel from the display apparatus 1000, the chat server 3000 transmit the chat room information of the chat room corresponding to the real-time broadcast channel to the display apparatus 1000.

Also, according to an embodiment of the disclosure, the chat server 3000 may relay a chat message. For example, the chat server 3000 may receive a chat message from the device of the user account belonging to the chat room and transmit the received chat message to the devices of all user accounts belonging to the chat room.

Also, according to an embodiment of the disclosure, the chat server 3000 may receive a chat message of the chat room from the mobile device 2000 and the display apparatus 1000. In response to receiving the chat message of the chat room, the chat server 3000 may transmit the received chat message to the devices of the user account belonging to the chat room.

Also, according to an embodiment of the disclosure, the chat server 3000 may divide one chat room into a plurality of chat rooms and distribute the users of the chat room into the plurality of chat rooms based on the chat rate of the user. In this case, the chat server 3000 may determine the number of the plurality of chat rooms by determining a suitable chat rate range of the chat room based on at least one of the genre of the broadcast content or the main viewing age for the broadcast content and comparing the current chat rate of the chat room with the determined suitable chat rate range of the chat room.

Also, according to an embodiment of the disclosure, the chat server 3000 may merge a plurality of chat rooms and merge the users of the plurality of chat rooms into one chat room based on the chat rate of the user.

Also, according to an embodiment of the disclosure, the chat server 3000 may provide a chat service more suitable for the user by determining a chat room to be moved based on the chat rate of the user.

Also, according to an embodiment of the disclosure, in response to receiving a request for setting one of the users belonging to the chat room as an interesting person, when the chat room of the user selected as the interesting person is changed, the chat server 3000 may move the user to the changed chat room together such that the interesting person and the user may be in the same chat room.

Also, according to an embodiment of the disclosure, the chat server 3000 may move the user to the chat room selected by the user. In this case, together with a list of a plurality of chat rooms corresponding to the broadcast content, the display apparatus 1000 may display at least one of the keyword or the chat rate of each of the plurality of chat rooms for the user's selection.

Also, according to an embodiment of the disclosure, the chat server 3000 may move the user to a chat room of the friend selected by the user among the users registered as friends.

Also, according to an embodiment of the disclosure, the chat server 3000 may generate a dedicated chat room requiring authentication information according to the request of the user.

Also, according to an embodiment of the disclosure, the identification information or the address information of the display apparatus 1000 and the mobile device 2000 may be stored in the chat server 3000 in correspondence to the same user account, and accordingly, the display apparatus 1000 and the mobile device 2000 may transmit a chat message to the chat server 3000 based on the same user account or receive chat messages of the same chat room from the chat server 3000.

Also, according to an embodiment of the disclosure, the mobile device 2000 may receive an input of a chat message for the chat room displayed on the display apparatus 1000 from the user and transmit the received chat message to the chat server 3000. Also, the mobile device 2000 may receive messages of the chat room from the chat server 3000 and display the received messages.

Also, according to an embodiment of the disclosure, based on the authentication code, the mobile device 2000 may provide a chat service for the chat room displayed on the display apparatus 1000. For example, the display apparatus 1000 may display the authentication code corresponding to the chat room, and the mobile device 2000 may receive an input of the authentication code displayed on the display apparatus 1000 from the user and transmit the received authentication code to the chat server 3000 to receive chat messages of the chat room from the chat server 3000 or transmit a chat message for the chat room to the chat server 3000. Accordingly, even when the user does not have a user account for the chat service provided by the chat server 3000 or does not input user account information for the chat service in the mobile device 2000, the mobile device 2000 may provide a chat room for the broadcast content displayed on the display apparatus 1000.

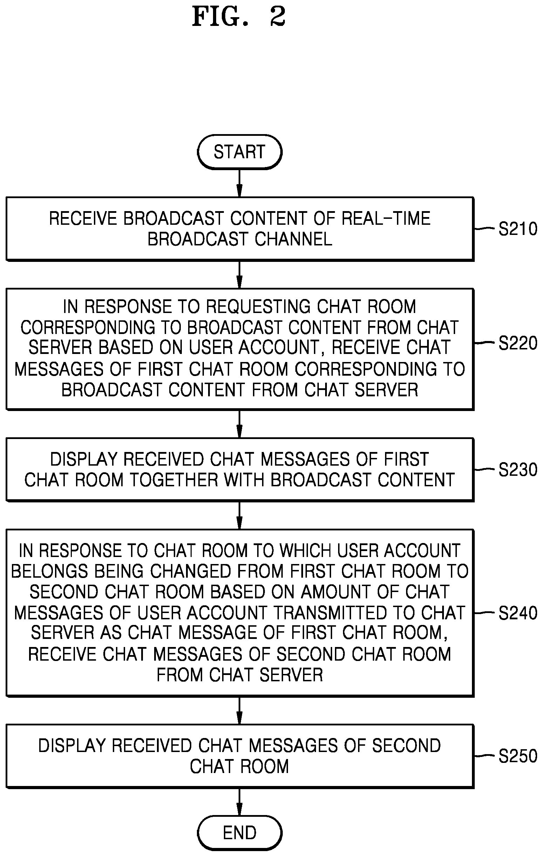

FIG. 2 is a flowchart illustrating a method by which a display apparatus 1000 provides a chat service for broadcast content, according to an embodiment of the disclosure.

In operation S210, the display apparatus 1000 may receive broadcast content of a real-time broadcast channel.

In operation S220, the display apparatus 1000 may request a chat room corresponding to the broadcast content from the chat server 3000 based on a user account and receive chat messages of a first chat room corresponding to the broadcast content from the chat server 3000.

The display apparatus 1000 may provide a chat room start menu for receiving a user input for starting a chat room service. In response to receiving a user input for selecting the chat room start menu, the display apparatus 1000 may request a chat room corresponding to the broadcast content from the chat server 3000. In this case, the display apparatus 1000 may transmit channel information and content identification information of the broadcast content to the chat server 3000. For example, the display apparatus 1000 may obtain channel information and content identification information of the broadcast content displayed based on electronic program guide (EPG) information and transmit the obtained channel information and content identification information of the broadcast content to the chat server 3000. The channel information of the broadcast content may include at least one of service provider identification information of the broadcast content or identification information of the channel (e.g., the channel number or the channel name).

The chat server 3000 may store a user account corresponding to the first chat room corresponding to the broadcast content of the real-time broadcast channel and transmit chat room information and chat messages of the first chat room to the display apparatus 1000. Also, according to an embodiment of the disclosure, the display apparatus 1000 may request a chat room corresponding to the real-time broadcast channel from the server 3000. In this case, the display apparatus 1000 may transmit only the channel information of the broadcast content to the server 3000. The chat server 3000 may store a user account corresponding to the first chat room corresponding to the real-time broadcast channel and transmit chat room information and chat messages of the first chat room to the display apparatus 1000.

In operation S230, the display apparatus 1000 may display the chat messages of the first chat room received from the chat server 3000 together with the broadcast content.

Also, the display apparatus 1000 may display a plurality of preset chat messages and transmit, in response to receiving a user input for selecting one of the plurality of preset chat messages, the selected preset chat message as a chat message of the first chat room to the chat server 3000. The plurality of preset chat messages may include, but is not limited to, simple sentences, words, and emoticons representing feelings.

In operation S240, in response to the chat room to which the user account belongs being changed from the first chat room to a second chat room based on the amount of chat messages of the user account transmitted to the chat server 3000 as the chat message of the first chat room, the display apparatus 1000 may receive chat messages of the second chat room from the chat server 3000.

The amount of chat messages of the user account transmitted to the chat server 3000 as the chat message of the first chat room may be referred to as the chat rate of the user. Particularly, the amount of chat messages may represent the number of chat messages per unit time.

The chat server 3000 may divide one chat room into a plurality of chat rooms. Also, the chat server 3000 may merge a plurality of chat rooms into one chat room. For example, the chat server 3000 may determine the number of the plurality of chat rooms by determining a suitable chat rate range of the chat room based on at least one of the genre of the broadcast content or the main viewing age for the broadcast content and comparing the chat rate of the first chat room with the suitable chat rate range of the first chat room.

When determining to divide the first chat room into a plurality of chat rooms including the second chat room, the chat server 3000 may change the chat room to which the user account belongs from the first chat room to the second chat room based on the chat rate of the user.

Also, when determining to merge the first chat room into the second chat room, the chat server 3000 may change the chat room to which the user account belongs from the first chat room to the second chat room based on the chat rate of the user.

In operation S250, the display apparatus 1000 may display the received chat messages of the second chat room.

Also, according to an embodiment of the disclosure, in response to receiving an authentication code corresponding to the first chat room from the chat server 3000, the display apparatus 1000 may display the authentication code. Also, in response to the authentication code input by the user to the mobile device 2000 being transmitted to the chat server 3000, the mobile device 2000 may receive chat messages of the first chat room from the chat server 3000.

Also, according to an embodiment of the disclosure, in response to receiving a user input for selecting one of the users belonging to the second chat room as an interesting person, the display apparatus 1000 may transmit a request for setting the selected user as an interesting person to the chat server 3000. Also, in response to the user selected as the interesting person being moved from the second chat room to a third chat room, the chat server 3000 may change the chat room of the user account from the second chat room to the third chat room.

Also, according to an embodiment of the disclosure, together with a list of a plurality of chat rooms corresponding to the broadcast content, the display apparatus 1000 may display the keyword and the chat rate of each of the plurality of chat rooms. Also, in response to receiving a user input for selecting one of the plurality of chat rooms, the display apparatus 1000 may transmit a request for changing the chat room of the user account from the second chat room to the selected chat room to the chat server 3000.

Also, according to an embodiment of the disclosure, in response to receiving a user input for selecting one of the users belonging to the second chat room as an interesting person, the display apparatus 1000 may transmit a request for setting the selected user as an interesting person to the chat server 3000. Also, in response to the user selected as the interesting person being moved from the second chat room to a third chat room, the chat server 3000 may change the chat room of the user account from the second chat room to the third chat room.

Also, according to an embodiment of the disclosure, together with a list of a plurality of chat rooms corresponding to the broadcast content, the display apparatus 1000 may display the keyword and the chat rate of each of the plurality of chat rooms. In response to receiving a user input for selecting one of the plurality of chat rooms, the display apparatus 1000 may transmit a request for changing the chat room of the user account from the second chat room to the selected chat room to the chat server 3000.

Also, according to an embodiment of the disclosure, the display apparatus 1000 may receive a list of friends corresponding to the user account from the chat server 3000. In response to receiving a user input for selecting one of the friends, the display apparatus 1000 may transmit a request for changing the chat room of the user account from the second chat room to the chat room of the selected friend to the chat server 3000.

Also, according to an embodiment of the disclosure, in response to receiving a user input for opening a dedicated chat room requiring authentication information, the display apparatus 1000 may transmit a request for generating a dedicated chat room requiring authentication information corresponding to the broadcast content to the chat server 3000.

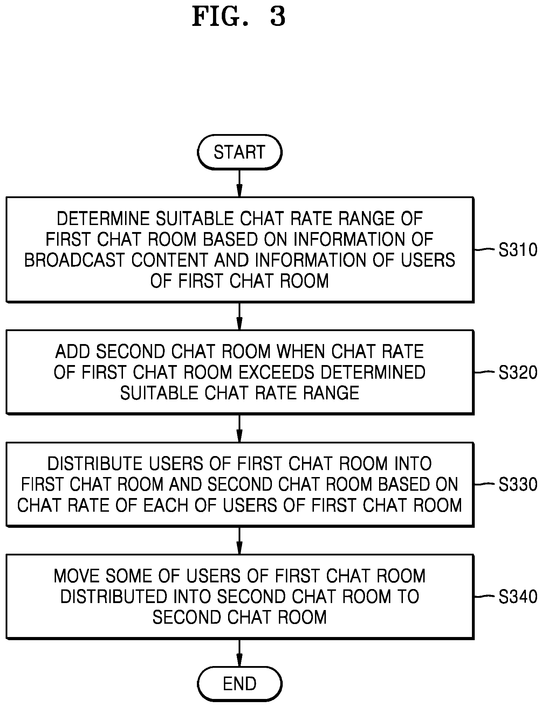

FIG. 3 is a flowchart illustrating a method by which a chat server 3000 divides a chat room, according to an embodiment of the disclosure.

In operation S310, the chat server 3000 may determine a suitable chat rate range of the first chat room based on information of the broadcast content and information of the users of the first chat room.

The information of the broadcast content may include, but is not limited to, the genre of the broadcast content and the main viewing age for the broadcast content. The chat server 3000 may determine a suitable chat rate range of the first chat room based on information of the broadcast content. For example, when the genre of the broadcast content is documentary, the suitable chat rate range of the first chat room may be normal (e.g., about 10 messages to about 30 messages per minute or about 10 times to about 30 times per minute). Also, when the genre of the broadcast content is sports, the suitable chat rate range of the first chat room may be high (e.g., about 40 messages to about 50 messages per minute). Also, when the main viewing age for the broadcast content is teenage, the suitable chat rate range of the first chat room may be high. Also, when the main viewing age for the broadcast content is sixty, the suitable chat rate range of the first chat room may be low (e.g., about 5 messages to about 15 messages per minute).

Also, the information of the users may include, but is not limited to, the past average chat rate of the user and the age of the users stored corresponding to the user account. The chat server 3000 may determine a suitable chat rate range of the first chat room based on the information of the users. For example, when the chat rate of the first chat room is 30 messages per minute based on the past average chat rate of 30 users (e.g., 1 messages per minute, 0.5 messages per minute, or 1.5 messages per minute), the chat server 3000 may determine the suitable chat rate range of the first chat room as about 25 messages to about 35 messages per minute. Also, when the average of the ages of the users is twenty, the chat server 3000 may determine the suitable chat rate range of the first chat room as high.

The chat server 3000 may determine a suitable chat rate range of the first chat room based on at least one of the genre of the broadcast content, the main viewing age, the past average chat rate of the users of the first chat room, or the average of the ages of the users.

In operation S320, the chat server 3000 may add the second chat room when the chat rate of the first chat room is greater than the determined suitable chat rate range.

The chat server 3000 may determine the chat rate of the first chat room. The chat server 3000 may calculate the number of chat messages of the first chat room received by the chat server 3000 per unit time as the chat rate of the first chat room. The unit time may be, but is not limited to, 1 second, 1 minute, or 10 minutes.

When the calculated chat rate of the first chat room is greater than the determined suitable chat rate range, the chat server 3000 may add the second chat room into which the users of the first chat room are to be distributed. For example, the chat server 3000 may add the second chat room when the calculated chat rate of the first chat room is greater than the suitable chat rate range at least once. Also, as another example, the chat server 3000 may add the second chat room when the calculated chat rate of the first chat room is greater than the suitable chat rate range for more than a reference time (e.g., 5 minutes). Also, as another example, the chat server 3000 may add the second chat room when the calculated chat rate of the first chat room is greater than the suitable chat rate range more than a reference number of times for a reference time (e.g., 5 minutes).

Also, according to an embodiment of the disclosure, the chat server 3000 may determine the number of chat rooms to be added based on the calculated chat rate of the first chat room and the determined suitable chat rate range. For example, when the determined suitable chat rate range is about 10 messages to about 20 messages per minute and the calculated chat rate of the first chat room is 70 messages per minute, the first chat room may be divided into four chant rooms such that the chat rate of the chat rooms after the division may fall within the suitable chat rate range.

Also, according to an embodiment of the disclosure, the chat server 3000 may add a plurality of chat rooms having different suitable chat rate ranges.

In operation S330, the chat server 3000 may distribute the users of the first chat room into the first chat room and the second chat room based on the chat rate of each of the users of the first chat room.

Based on the chat rate of each of the users of the first chat room, the chat server 3000 may distribute the users of the first chat room into the first chat room and the second chat room such that the chat rate of the chat rooms after the division may be adjusted within the suitable chat rate range. Accordingly, a user having a relatively high chat rate and a user having a low chat rate may be included together in the chat rooms after the division.

Also, according to an embodiment of the disclosure, the chat server 3000 may distribute (or divide) the users into a plurality of chat rooms having different suitable chat rate ranges based on the chat rates of the users of the first chat room. For example, the chat server 3000 may place users having a high chat rate in a chat room having the highest suitable chat rate range, place users having a normal chat rate in a chat room having a normal suitable chat rate range, and place users having a low chat rate in a chat room having a low suitable chat rate range.

In operation S340, the chat server 3000 may move some of the users of the first chat room (distributed into the second chat room in operation S330) to the second chat room.

For example, when determining to move a first user of the first chat room to the added second chat room, the chat server 3000 may store the identification information of the second chat room as the chat room of the first user corresponding to the user account of the first user and transmit the chat messages of the second chat room to the display apparatus 1000 of the first user based on the address information of the display apparatus 1000 corresponding to the user account of the first user.

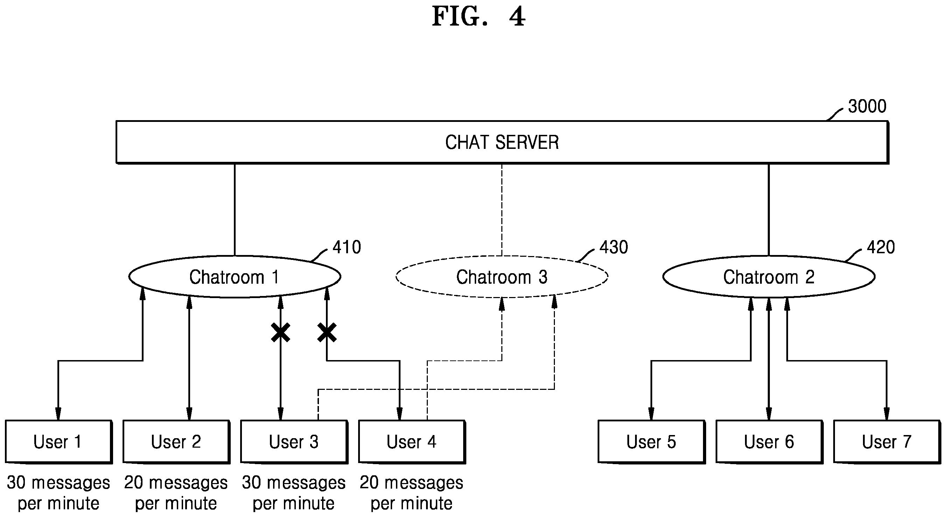

FIG. 4 illustrates a method by which a chat server 3000 divides a chat room, according to an embodiment of the disclosure.

Referring to FIG. 4, the chat server 3000 may generate a chat room 1 (410) and a chat room 2 (420) and relay chat messages of the chat room 1 (410) and the chat room 2 (420). The chat rooms (410 and 420) may be modules logically generated by the chat server 3000.

Also, in the chat room 1, users 1 to 4 may exchange chat messages with each other. Also, in the chat room 2, users 5 to 7 may exchange chat messages with each other.

The chat server 3000 may determine a suitable chat rate range of the chat room based on information of the broadcast content and information of the users in the chat room. For example, in the chat server 3000, when the chat room 1 is a chat room for a drama and the chat rate of the chat room based on the past average chat rates of the users of the chat room is 50 messages per minute, the suitable chat rate range may be about 45 messages to about 55 messages per minute.

Also, the chat server 3000 may determine the chat rate of the chat room 1 as 100 messages per minute based on the number of chat messages transmitted to the chat server 3000 per unit time.

When the chat rate of the chat room is greater than the determined suitable chat rate range, the chat server 3000 may add a chat room 3 (430).

The chat server 3000 may distribute the users of the first chat room into the chat room 1 and the chat room 3 based on the chat rate of each of the users of the chat room 1. For example, the chat server 3000 may leave the user 1 and the user 2 in the chat room 1 and move the user 3 and the user 4 to the chat room 3 such that the chat rate of the chat room 1 and the chat room 3 after distribution of the users may be about 45 messages to about 55 messages per minute, which is the suitable chat rate range.

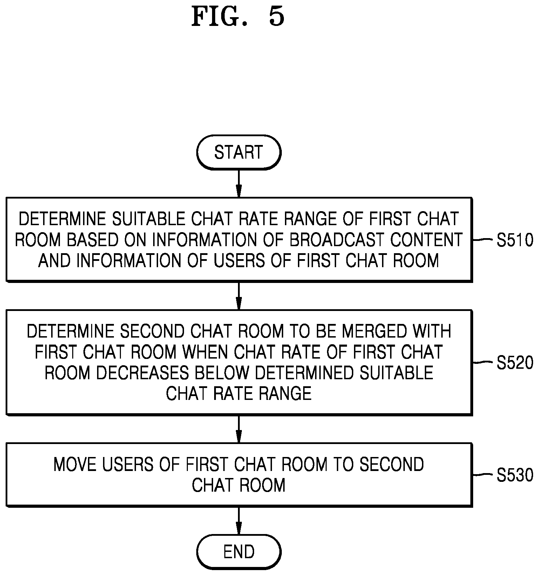

FIG. 5 is a flowchart illustrating a method by which a chat server 3000 merges a plurality of chat rooms, according to an embodiment of the disclosure.

In operation S510, the chat server 3000 may determine a suitable chat rate range of the first chat room based on information of the broadcast content and information of the users of the first chat room. Operation S510 may be described with reference to operation S310 of FIG. 3.

In operation S520, when the chat rate of the first chat room decreases below the determined suitable chat rate range, the chat server 3000 may determine the second chat room to be merge with the first chat room.

The chat server 3000 may identify the chat rooms in which the chat rate is less than the suitable chat rate range, in addition to the first chat room. When the first chat room and the second chat room are merged, the chat server 3000 may select the second chat room such that an expected chat rate of the merged chat room may be within the suitable chat rate range of the first chat room and may be within the suitable chat rate range of the second chat room.

In operation S530, the chat server 3000 may move the users of the first chat room to the second chat room. Operation S530 may be described with reference to operation S340 of FIG. 3.

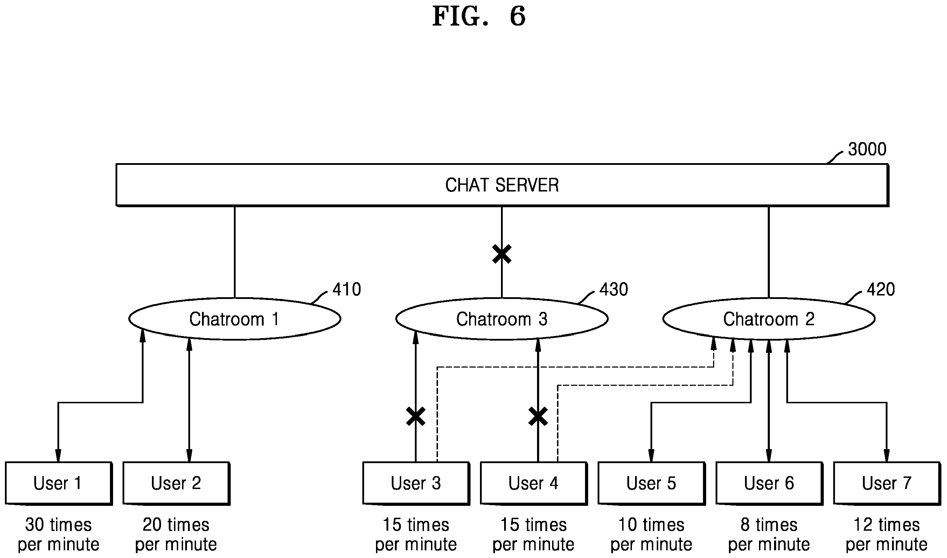

FIG. 6 illustrates a method by which a chat server 3000 merges a plurality of chat rooms, according to an embodiment of the disclosure.

Referring to FIG. 6, the chat server 3000 may generate a chat room 1 (410), a chat room 2 (420), and a chat room 3 (430) and relay chat messages of the chat room 1 (410), the chat room 2 (420), and the chat room 3 (430).

Also, in the chat room 3, users 3 and 4 may exchange chat messages with each other. Also, in the chat room 2, users 5 to 7 may exchange chat messages with each other.

The chat server 3000 may determine a suitable chat rate range of the chat room based on information of the broadcast content and information of the users in the chat room. For example, in the chat server 3000, when the chat room 3 is a chat room for an entertainment program in which the teenage is the main viewing age and the suitable chat rate of the chat room 3 based on the past average chat rates of the users of the chat room 3 is 70 messages per minute, the suitable chat rate range may be about 65 messages to about 75 messages per minute. Also, for example, in the chat server 3000, when the suitable chat rate of the chat room 2 based on the past average chat rates of the users of the chat room 2 is 60 messages per minute, the suitable chat rate range may be about 55 messages to about 65 messages per minute.

Also, the chat server 3000 may determine the chat rate of the chat room 3 as 30 messages per minute based on the number of chat messages of the chat room 3 transmitted to the chat server 3000 per unit time. Also, the chat server 3000 may determine the chat rate of the chat room 2 as 30 messages per minute based on the number of chat messages of the chat room 2 transmitted to the chat server 3000 per unit time.

In response to determining that the chat rate of the chat room 3 is less than the suitable chat rate range, the chat server 3000 may determine the chat room 2 among the chat room 1 and the chat room 2 as a chat room to be merged with the chat room 3.

The chat server 3000 may move the users 3 and 4 to the chat room 2.

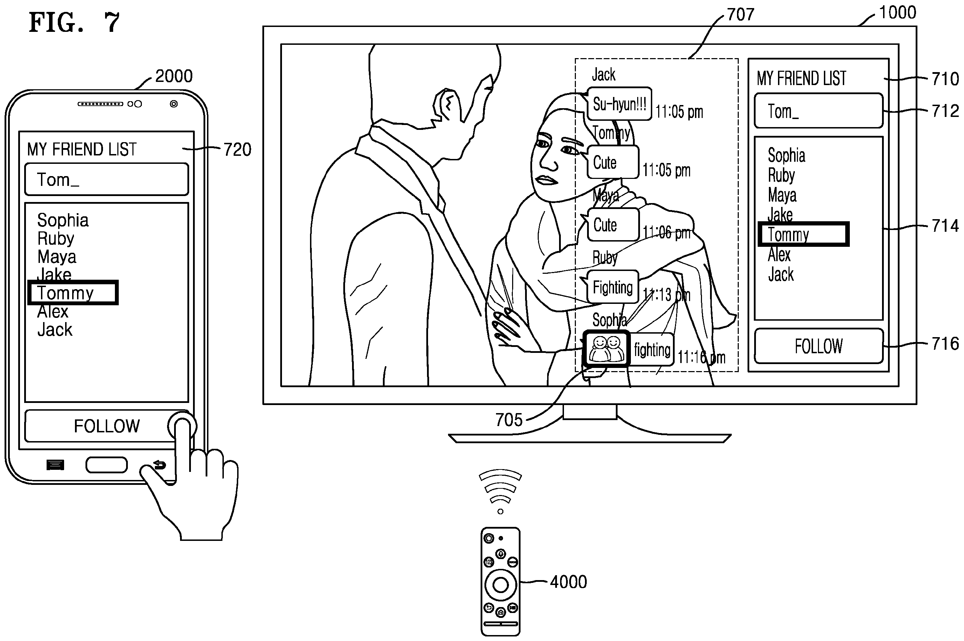

FIG. 7 illustrates a method by which a display apparatus 1000 provides a user interface for selecting an interesting friend (i.e., a friend of interest), according to an embodiment of the disclosure.

Referring to FIG. 7, a user interface 710 for selecting an interesting friend may include an interesting friend selection icon 705 for selecting an interesting friend to move a chat room together, a friend list 714, and an input window 712 for inputting a friend name, and a button 716 for registering a selected friend as an interesting friend.

The display apparatus 1000 may display the interesting friend selection icon 705 for selecting an interesting friend to move a chat room together in the chat window 707.

Also, in response to receiving a user input for selecting the interesting friend selection icon 705, the display apparatus 1000 may request the chat server 3000 for a user list of a first chat room being displayed, receive the user list of the first chat room from the chat server 3000, and display the received user list of the first chat room.

Also, the display apparatus 1000 may receive a user input for selecting a friend in the friend list 714 of the first chat room by using a user input unit such as the remote controller 4000. Also, the display apparatus 1000 may receive a user input for inputting a user name through the input window 712.

Also, the display apparatus 1000 may receive a user input for selecting the selected user as an interesting friend to move together. For example, the display apparatus 1000 may receive a user input for pressing a confirmation button of the remote controller 4000 as a user input for selecting the button 716 for registering the selected user as an interesting friend.

In response to receiving a user input for registering "Tommy" as an interesting friend, the display apparatus 1000 may transmit, to the chat server 3000, "Tommy" as account information of the selected user, identification information of the chat room, user account information of the display apparatus user, and a registration request for requesting to register "Tommy" as an interesting friend to move together.

The chat server 3000 may store the user account information of the user selected corresponding to the user account information of the display apparatus user, as an interesting friend.

Also, when changing the first chat room of the interesting friend into the second chat room, the chat server 3000 may change the chat room of the display apparatus user into the second chat room such that the display apparatus user may belong to the same chat room as the interesting friend.

Also, when the display apparatus user starts a chat service, the chat server 3000 may place the display apparatus user in the chat room to which the interesting friend belongs.

The mobile device 2000 may also provide a user interface 720 for selecting an interesting friend to move the chat room together. The mobile device 2000 may perform the embodiment of the display apparatus 1000 illustrated in FIG. 7, in the same manner.

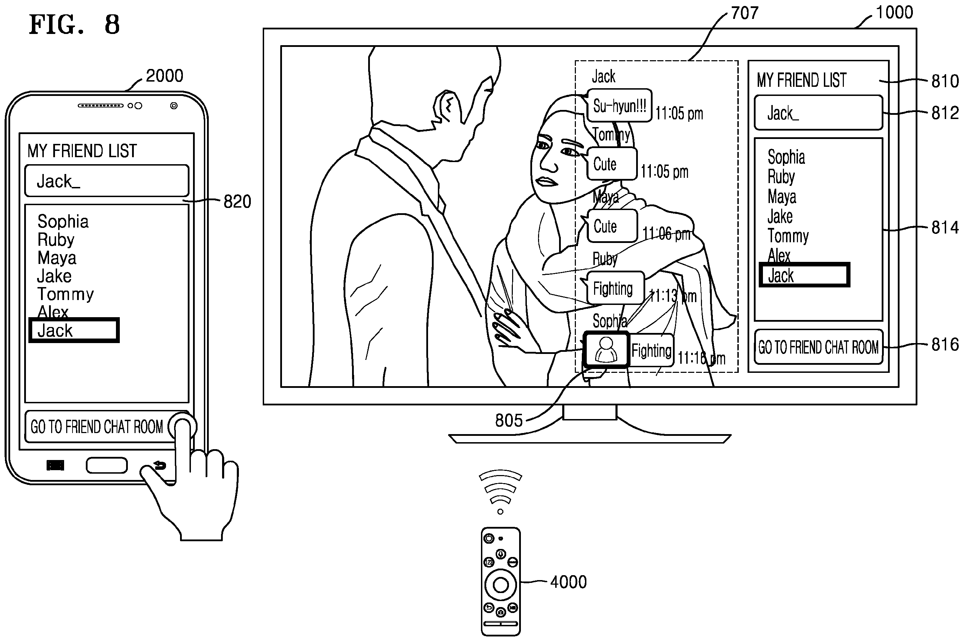

FIG. 8 illustrates a method by which a display apparatus 1000 provides a user interface for changing a user's chat room to a friend's chat room, according to an embodiment of the disclosure.

Referring to FIG. 8, a user interface 810 for selecting a friend may include a friend selection icon 805, a friend list 814 of the user, an input window 812 for inputting a friend name, and a button 816 for changing a chat room of the user into a chat room of the selected friend.

The display apparatus 1000 may display the friend selection icon 805 in the chat window 707.

Also, in response to receiving a user input for selecting the friend selection icon 805, the display apparatus 1000 may request the chat server 3000 for a friend list of the user based on the user account of the display apparatus 1000, receive the friend list of the user from the chat server 3000, and display the received friend list. Also, the display apparatus 1000 may display identification information of the chat room of the friend together with the friend name.

Also, the display apparatus 1000 may receive a user input for selecting a friend in the friend list 814 by using the remote controller 4000. Also, the display apparatus 1000 may receive a user input for inputting a friend name through the input window 812.

Also, the display apparatus 1000 may receive a user input for moving the user to a chat room of the selected friend. For example, the display apparatus 1000 may receive a user input for pressing a confirmation button of the remote controller 4000 as a user input for selecting the button 816 for moving the user to the chat room of the selected friend.

In response to receiving a user input for registering "Jack" as an interesting friend, the display apparatus 1000 may transmit, to the chat server 3000, user account information of the selected friend "Jack", user account information of the user of the display apparatus 1000, and a movement request for requesting to move the user of the display apparatus 1000 to the chat room of "Jack".

The chat server 3000 may move the user of the display apparatus 1000 to the chat room of "Jack". For example, the chat server 3000 may change the chat room of the user of the display apparatus 1000 into the chat room of "Jack" and transmit chat messages and chat room information of the chat room of "Jack" to the display apparatus 1000.

The display apparatus 1000 may display the chat messages and the chat room information received from the chat server 3000. Also, when a chat message is received from the display apparatus 1000, the chat message may be transmitted to the devices of the users belonging to the changed chat room.

The mobile device 2000 may also provide a user interface 820 for moving to the chat room of the friend. The mobile device 2000 may perform the embodiment of the display apparatus 1000 illustrated in FIG. 8, in the same manner.

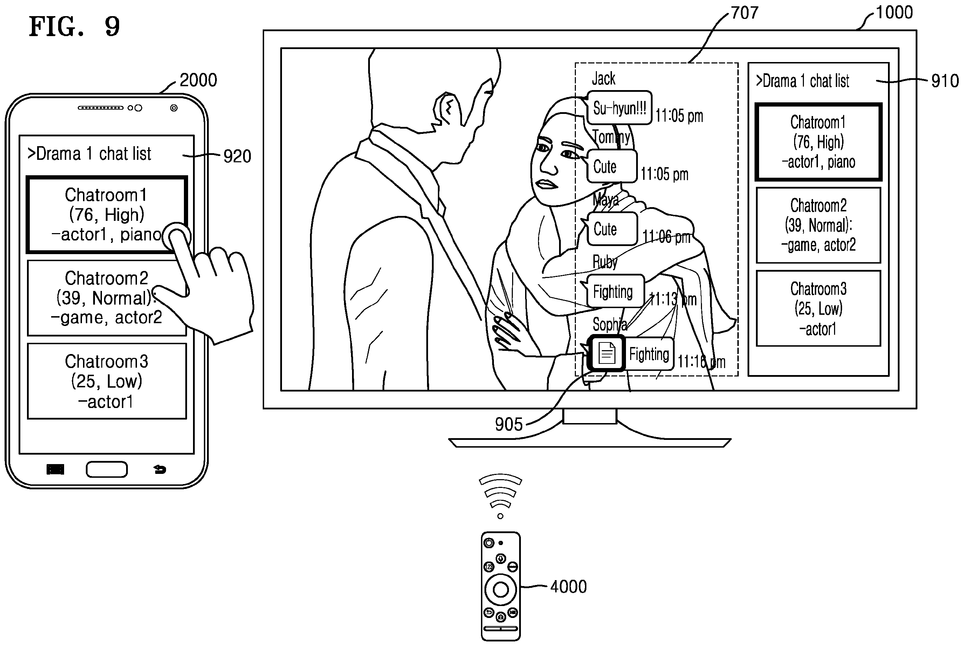

FIG. 9 illustrates a method by which a display apparatus 1000 provides a user interface for selecting a chat room, according to an embodiment of the disclosure.

Referring to FIG. 9, a user interface 910 for selecting a chat room may include a chat room selection icon 905 and a chat room list.

The display apparatus 1000 may display the chat room selection icon 905 in the chat window 707.

Also, in response to receiving a user input for selecting the chat room selection icon 905, the display apparatus 1000 may transmit a request for identification information of the broadcast content displayed and a list of chat rooms for the broadcast content to the chat server 3000, receive a list of chat rooms and information of the chat rooms from the chat server 3000, and display the received list of chat rooms and the information of the chat rooms.

The information of the chat room may include, but is not limited to, the keyword of the chat room and the chat rate of the chat room.

The keyword of the chat room 1 may be determined in real time from the chat messages of the chat room by the chat server 3000. For example, when the users of the chat room 1 chat about a piano and an actor in the broadcast content, the chat server 3000 may determine the keyword of the chat room 1 as the piano and the actor in real time from the chat messages of the chat room 1.

Also, the chat rate of the chat room 1 may be calculated in real time by the chat server 3000 based on the number of chat messages of the chat room 1 transmitted to the chat server 3000 per unit time. For example, when 76 chat messages are transmitted per minute to the chat server 3000 as chat messages of the chat room 1, the chat server 3000 may calculate the chat rate of the chat room 1 as 76 chat messages per minute and determine the chat rate of the chat room 1 as high.

The display apparatus 1000 may receive the keywords and the chat rates of chat rooms from the chat server 3000 in real time. When the keywords and the chat rates of the chat rooms are changed, the display apparatus 1000 may change and display the keywords and the chat rates of the chat rooms in real time.

Also, the display apparatus 1000 may display identification information of the chat room to which the user belongs in the chat room list.

Also, in response to receiving a user input for selecting a chat room in the chat room list, the display apparatus 1000 may transmit, to the chat server 3000, identification information of the selected chat room, user account information of the user, and a movement request for requesting to move the user to the selected chat room.

The chat server 3000 may move the user to the selected chat room based on the received identification information and user account information of the chat room. For example, the chat server 3000 may store the identification information of the selected chat room corresponding to the user account information and transmit chat messages of the selected chat room to the display apparatus 1000. Also, in response to receiving a chat message of the user from the display apparatus 1000, the chat server 3000 may transmit the received chat message as a chat message to the devices of users belonging to the selected chat room.

Accordingly, when a user input for selecting the chat room 1 is received while chatting in the chat room 3, the user may chat in the chat room 1.

The mobile device 2000 may also provide a user interface 920 for selecting the chat room. The mobile device 2000 may perform the embodiment of the display apparatus 1000 illustrated in FIG. 9, in the same manner.

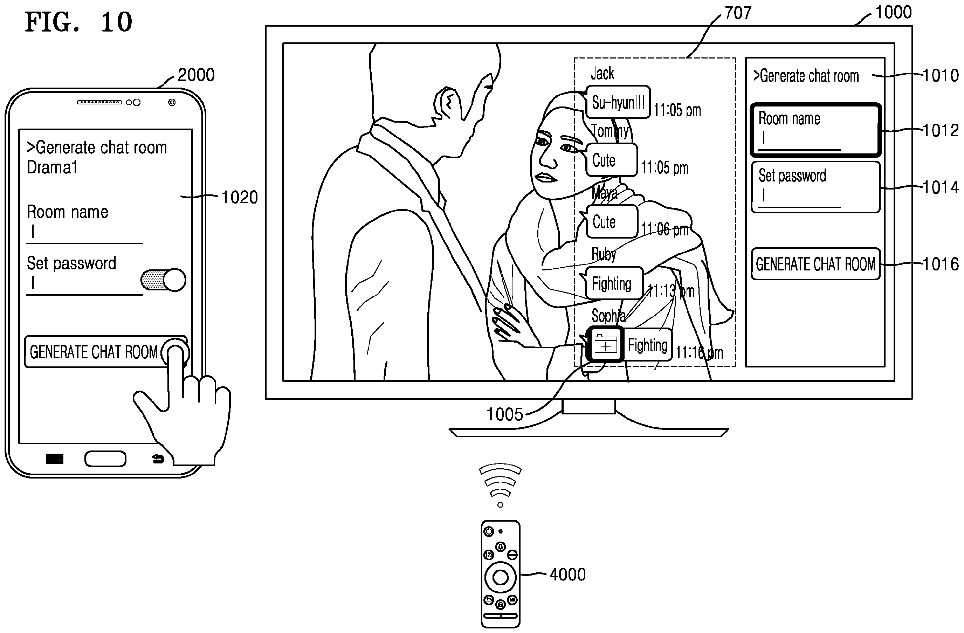

FIG. 10 illustrates a method by which a display apparatus 1000 provides a user interface for generating a chat room, according to an embodiment of the disclosure.

Referring to FIG 10, a user interface 1010 for generating a chat room may include a chat room generation icon 1005, a room name input menu 1012 of the chat room, a password setting menu 1014 of the chat room, and a button 1016 for generating a new chat room based on the input information of the chat room.

The display apparatus 1000 may display the chat room generation icon 1005 in the chat window 707.

Also, in response to receiving a user input for selecting the chat room generation icon 1005, the display apparatus 1000 may display the menu 1012 for inputting the room name of the chat room, the password setting menu 1014 of the chat room, and the button 1016 for generating a new chat room based on the input information of the chat room.

In response to receiving a user input for inputting the room name through the menu 1012 for inputting the room name of the chat room, a user input for inputting a password to be set through the password setting menu 1014 of the chat room, and a user input for selecting the button 1016 for generating a new chat room, the display apparatus 1000 may transmit, to the chat server 3000, a chat room generation request for generating a new chat room for the broadcast content based on the input room name, the password, the identification information of the broadcast content displayed, and the input room name and password.

In response to receiving the chat room generation request, the chat server 3000 may generate a new chat room for broadcast content having the received room name and password. Also, the chat server 3000 may move the user to the generated chat room. For example, the chat server 3000 may store user account information of the user as the user of the generated chat room and transmit a chat message of the generated chat room to the display apparatus 1000.

In response to receiving a participation request for entering the chat room generated from a device of another user account, the chat server 3000 may request a password from the device, and when it is determined that the password information received from the device matches the password of the generated chat room, participate the user of the other user account having inputted the participation request as the user of the generated chat room. For example, the chat server 3000 may store the other user account as the user of the generated chat room.

According to an embodiment of the disclosure, the display apparatus 1000 may transmit a chat room generation request for generating a new chat room without a password to the chat server 3000, and the chat server 3000 may generate a new chat room not requiring a password to participate in the chat server 3000.

The mobile device 2000 may also provide a user interface 1020 for generating a new chat room. The mobile device 2000 may perform the embodiment of the display apparatus 1000 illustrated in FIG. 10, in the same manner.

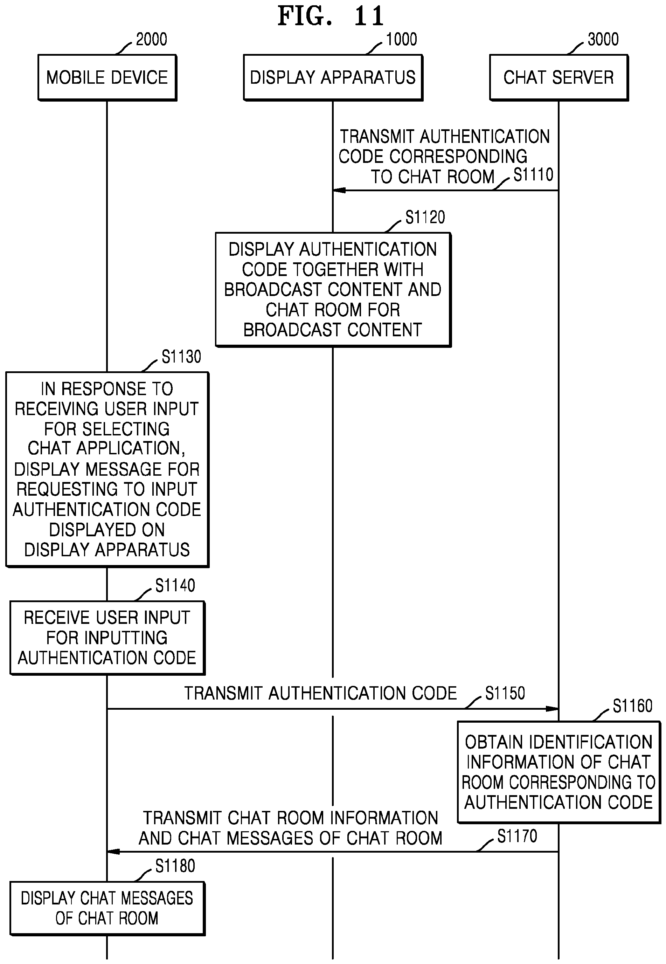

FIG. 11 is a flowchart illustrating a method by which a display apparatus 1000 provides an authentication code, according to an embodiment of the disclosure.

In operation S1110, the chat server 3000 may transmit an authentication code corresponding to the chat room to the display apparatus 1000.

The chat server 3000 may generate an authentication code corresponding to each of the chat rooms and store the generated authentication code. The authentication code may be stored in the chat server 3000 as identification information for identifying each of the chat rooms.

In response to receiving a request for the chat room from the display apparatus 1000, the chat server 3000 may transmit the authentication code of the chat room together with the information of the chat room.

In operation S1120, the display apparatus 1000 may display the authentication code together with the broadcast content and the chat room for the broadcast content.

In response to receiving the information of the chat room and the authentication code of the chat room from the chat server 3000, the display apparatus 1000 may display the authentication code together with the broadcast content of the real-time broadcast channel and the chat room for the broadcast content.

In operation S1130, in response to receiving a user input for selecting a chat application, the mobile device 2000 may display a message for requesting to input the authentication code displayed on the display apparatus 1000.

In operation S1140, the mobile device 2000 may receive a user input for inputting the authentication code.

In operation S1150, the mobile device 2000 may transmit the authentication code to the chat server 3000.

In operation S1160, the chat server 3000 may obtain identification information of the chat room corresponding to the authentication code.

In operation S1170, the chat server 3000 may transmit the chat room information and the chat messages of the chat room to the mobile device 2000.

In operation S1180, the mobile device 2000 may display the chat messages of the chat room.

Accordingly, even when the user does not have a user account for the chat service provided by the chat server 3000 or does not input user account information for the chat service in the mobile device 2000, the mobile device 2000 may provide a chat room for the broadcast content displayed on the display apparatus 1000.

Also, in response to receiving a user input for inputting a chat message, the mobile device 2000 may transmit the user name, the identification information of the chat room, the address information of the mobile device 2000, and the chat message to the chat server 3000. Based on the received identification information of the chat room, the chat server 3000 may transmit the received chat message to the devices of users belonging to the chat room including the display apparatus 1000.

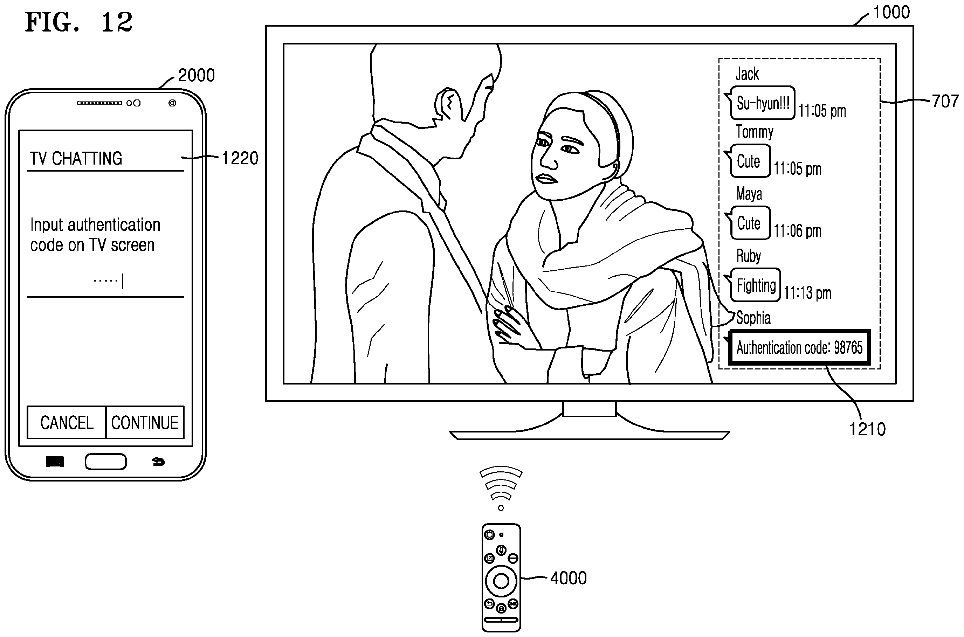

FIG. 12 illustrates a method by which a display apparatus 1000 provides an authentication code, according to an embodiment of the disclosure.

Referring to FIG. 12, the display apparatus 1000 may display an authentication code 1210 corresponding to the chat room.

In response to receiving a user input for selecting the chat application, the mobile device 2000 may display a chat message 1220 for requesting to input the authentication code displayed on the display apparatus 1000.

In response to receiving a user input for inputting the authentication code 1210 displayed on the display apparatus 1000, the mobile device 2000 may transmit the input authentication code to the chat server 3000.

The chat server 3000 may obtain identification information of the chat room corresponding to the authentication code received from the mobile device 2000. Also, the chat server 3000 may transmit the chat room information and the chat messages of the chat room to the mobile device 2000. Accordingly, the mobile device 2000 may display the chat messages of the chat room.

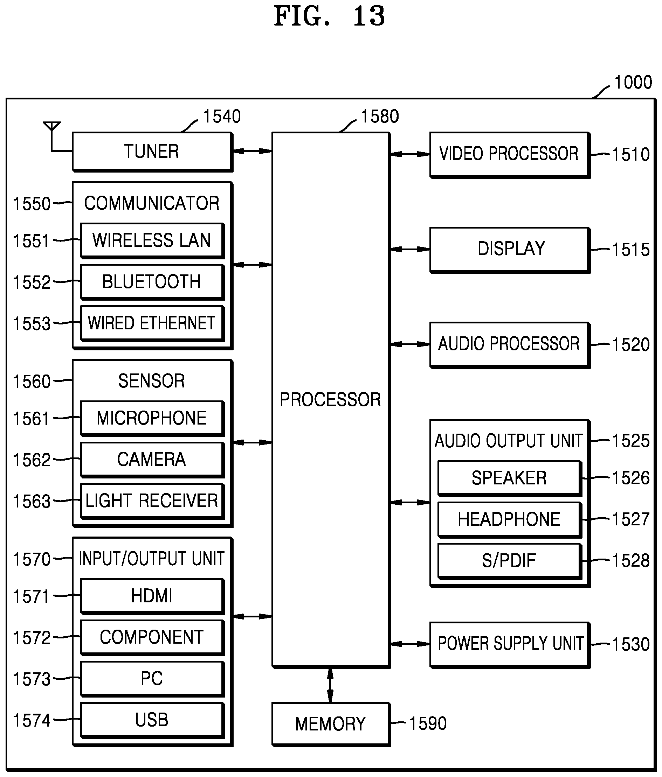

FIG. 13 is a block diagram of a display apparatus 1000 according to an embodiment of the disclosure.

Referring to FIG. 13, the display apparatus 1000 may include a video processor 1510, a display 1515, an audio processor 1520, an audio output unit 1525, a power supply unit 1530, a tuner 1540, a communicator 1550, a sensor 1560, an input/output unit 1570, a processor 1580, and a memory 1590.

However, not all of the components illustrated in FIG. 13 are necessary components of the display apparatus 1000. The display apparatus 1000 may be implemented by more components than the components illustrated in FIG. 13 or may be implemented by less components than the components illustrated in FIG. 13. For example, the display apparatus 1000 may include a display 1515, a communicator 1550, a memory 1590, and a processor 1580.

The video processor 1510 may perform processing on video data received by the display apparatus 1000. The video processor 1510 may perform various image processing such as decoding, scaling, noise removal, frame rate conversion, and/or resolution conversion, on the video data.

The display 1515 may display the video included in the broadcast signal received through the tuner 1540 under the control by the processor 1580. Also, the display 1515 may display the contents (e.g., moving images) input through the input/output unit 1570 or the communicator 1550. Also, the display 1515 may output the image stored in the memory 1590 under the control by the processor 1580. Also, the display 1515 may display a user interface (UI) for controlling the display apparatus 1000.

The audio processor 1520 may perform processing on audio data. The audio processor 1520 may perform various processing such as decoding, amplification, and/or noise removal on the audio data. Moreover, the audio processor 1520 may include a plurality of audio processing modules for processing the audios corresponding to a plurality of contents.

The audio output unit 1525 may output the audio included in the broadcast signal received through the tuner 1540 under the control by the controller (processor) 1580. The audio output unit 1525 may output the audio (e.g., voice or sound) input through the communicator 1550 or the input/output unit 1570. Also, the audio output unit 1525 may output the audio stored in the memory 1590 under the control by the processor 1580. The audio output unit 1525 may include at least one of a speaker 1526, a headphone output terminal 1527, or a Sony/Philips Digital Interface (S/PDIF) output terminal 1528. The audio output unit 1525 may include a combination of the speaker 1526, the headphone output terminal 1527, and the S/PDIF output terminal 1528.

The power supply unit 1530 may supply power from the external power source to the internal components (1510 to 1590) of the display apparatus 1000 under the control by the controller (processor) 1580. Also, the power supply unit 1530 may supply power, which is output from one or more batteries located in the display apparatus 1000, to the internal components (1510 to 1590) under the control by the processor 1580.

The tuner 1540 may tune and select only the frequency of a channel to be received by the display apparatus 1000, among various radio wave components, through amplification, mixing, and/or resonation of the broadcast signal received by wire or wireless. The broadcast signal may include audio, video, and additional information (e.g., EPG).

The tuner 1540 may receive a broadcast signal in a frequency band corresponding to a channel number (e.g., a cable broadcast number 506) according to a user input (e.g., a control signal received from an external control device () such as the remote controller 4000, such as a channel number input, a channel up-down input, and a channel input on the EPG screen).

The tuner 1540 may receive broadcast signals from various sources such as terrestrial broadcasting, cable broadcasting, and satellite broadcasting. The tuner 1540 may receive a broadcast signal from a source such as analog broadcasting or digital broadcasting. The broadcast signal received through the tuner 1540 may be decoded (e.g., audio decoding, video decoding, or additional information decoding) to be divided into audio, video, and/or additional information. The audio, video, and/or additional information may be stored in the memory 1590 under the control by the processor 1580.

According to an embodiment of the disclosure, the tuner 1540 may be referred to as a broadcast receiver.

The tuner 1540 of the display apparatus 1000 may include one tuner or a plurality of tuners. According to an embodiment of the disclosure, when the tuner 1540 includes a plurality of tuners, the display apparatus 1000 may display a plurality of broadcast signals in a plurality of windows constituting a multi-window screen provided on the display 1515.

The tuner 1540 may be implemented as an all-in-one type with respect to the display apparatus 1000 or may be implemented by a tuner connected to the input/output unit 1570 or a separate device (e.g., a set-top box) having a tuner electrically connected to the display apparatus 1000.

The communicator 1550 may connect the display apparatus 1000 to an external device (e.g., an audio device or a server) under the control by the processor 1580. The processor 1580 may transmit/receive content to/from the external device connected through the communicator 1550, download an application from the external device, or perform web browsing. Particularly, the communicator 1550 may receive content from an external device by accessing a network.

As described above, the communicator 1550 may include at least one of a short-range communication module, a wired communication module, or a mobile communication module.

FIG. 13 illustrates an example in which the communicator 1550 includes one of a wireless LAN 1551, a Bluetooth communicator 1552, and a wired Ethernet 1553.

Also, the communicator 1550 may include a module combination including one or more of the wireless LAN 1551, the Bluetooth communicator 1552, and the wired Ethernet 1553. Also, the communicator 1550 may receive a control signal of a remote control device under the control by the processor 1580. The control signal may be implemented as a Bluetooth type, an RF signal type, or a WiFi type.

The communicator 1550 may further include another short-range communication (e.g., Near Field Communication (NFC) module and a separate Bluetooth Low Energy (BLE) module in addition to Bluetooth.

The sensor 1560 may sense a user's voice, a user's image, or a user's interaction. The sensor 1560 may include, for example, a camera 1562.

The sensor 1560 may include a camera 1562. Also, the sensor 1560 may further include at least one of a microphone 1561 or a light receiver 1563.

The microphone 1561 may receive the user's utterance voice. The voice received through the microphone 1561 may be converted into an electrical signal and processed by the processor 1580. The user's voice may include, for example, a voice corresponding to the function or menu of the display apparatus 1000. For example, the recognition range of the microphone 1561 may be recommended to be within 4 m from the microphone 1561 to the user position, and the recognition range of the microphone 1561 may vary according to the size of the user's voice and the surrounding environment (e.g., speaker sound or ambient noise).

The microphone 1561 may be implemented integrally with the display apparatus 1000 or may be implemented as a separate type. The separate microphone 1561 may be electrically connected to the display apparatus 1000 through the communicator 1550 or the input/output unit 1570.

It will be readily understood by those of ordinary skill in the art that the microphone 1561 may be omitted depending on the performance and structure of the display apparatus 1000.

By using the motion recognition result, the processor 1580 may select a menu displayed on the display apparatus 1000 or may perform a control corresponding to the motion recognition result. For example, the control may include channel adjustment, volume adjustment, and/or indicator movement.

The camera 1562 may include a lens and an image sensor. The camera 1562 may support optical zoom or digital zoom by using a plurality of lenses and image processing. The recognition range of the camera 1562 may be set in various ways according to the angle of the camera and the environmental condition. When the camera 1562 includes a plurality of cameras, the camera 1562 may receive a three-dimensional still image or a three-dimensional motion by using the plurality of cameras.

The camera 1562 may be implemented integrally with the display apparatus 1000 or may be implemented as a separate type. A separate device including the separate camera 1562 may be electrically connected to the display apparatus 1000 through the communicator 1550 or the input/output unit 1570.

It will be readily understood by those of ordinary skill in the art that the camera 1562 may be omitted depending on the performance and structure of the display apparatus 1000.

The light receiver 1563 may receive a light signal (including a control signal), which is received from an external control device, through a light window of the bezel of the display 1515. The light receiver 1563 may receive a light signal corresponding to a user input (e.g., touch, press, touch gesture, voice, or motion) from a control device. The control signal may be extracted from the received light signal under the control by the processor 1580.

Also, the light receiver 1563 may receive a light signal output from the remote controller 4000, convert the light signal into user input information (button identification information of the remote controller) corresponding to the received light signal, and transmit the converted user input information to the processor 1580. The processor 1580 may control the display apparatus 1000 based on the user input information.

According to an embodiment of the disclosure, the sensor 1560 may be referred to as a 'user input unit' or a 'user input interface.'

The input/output unit 1570 may receive, for example, a video (e.g., moving image), an audio (e.g., voice and music), and additional information (e.g., EPG (Electronic Program Guide)) from outside the display apparatus 1000 under the control by the controller (processor) 1580. The input/output unit 1570 may include one of a High-Definition Multimedia Interface (HDMI) port 1571, a component jack 1572, a PC port 1573, and a USB port 1574. The input/output unit 1570 may include any combination of the HDMI port 1571, the component jack 1572, the PC port 1573, and the USB port 1574.

According to an embodiment of the disclosure, when the input/output unit 1570 is connected to an external source device including a tuner to receive broadcast content of a real-time broadcast channel from the external source device, the input/output unit 1570 may be referred to as a broadcast receiver 1600. For example, when an external set-top box including a tuner is connected to the HDMI port 1571 and then the display apparatus 1000 receives broadcast content of a real-time broadcast channel from the external set-top box through the HDMI port 1571, the HDMI port 1571 may be referred to as the broadcast receiver 1600.

It will be readily understood by those of ordinary skill in the art that the configuration and operation of the input/output unit 1570 may be variously implemented according to embodiments of the disclosure.

The processor 1580 may control an overall operation of the display apparatus 1000 and a signal flow between the internal components of the display apparatus 1000 and perform a data processing function. When there is a user's input or a preset stored condition is satisfied, the processor 1580 may execute various applications and an operating system (OS) stored in the memory 1590.

The memory 1590 may store one or more instructions. Also, the memory 1590 may store data and information necessary for the operation of the display apparatus 1000.

The processor 1580 may include a read-only memory (ROM) that stores a control program for controlling the display apparatus 1000, and a random-access memory (RAM) that stores a signal or data input from outside the display apparatus 1000 or is used as a storage area corresponding to various operations performed by the display apparatus 1000.

The processor 1580 may include a graphic processor (graphic processing unit) for graphic processing corresponding to video. The processor may be implemented as a System-on-Chip (SoC) including a combination of a GPU and a core. The processor may include a single core, a dual core, a triple core, a quad core, or any multiple core thereof.

Also, the processor 1580 may include a plurality of processors. For example, the processor may be implemented as a main processor and a sub processor operating in a sleep mode.

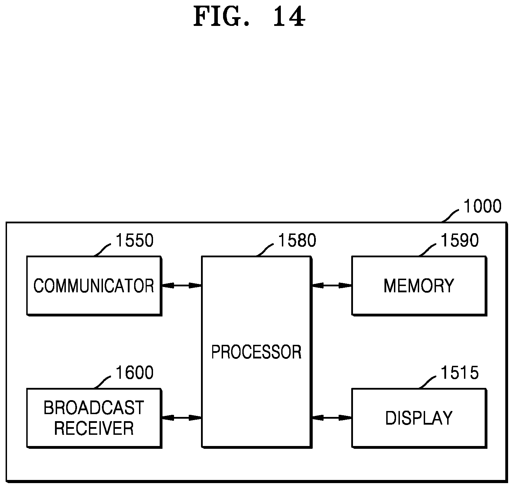

FIG. 14 is a block diagram of a display apparatus 1000 according to another embodiment of the disclosure.

Referring to FIG. 14, the display apparatus 1000 may include a communicator 1550, a broadcast receiver 1600, a processor 1580, a memory 1590, and a display 1515.

The communicator 1550, the processor 1580, the memory 1590, and the display 1515 may be described with reference to FIG. 13.

The broadcast receiver 1600 may include the tuner 1540 and the HDMI port 1571 of FIG. 13.

The processor 1580 may receive broadcast content of a real-time broadcast channel through the broadcast receiver 1600 by executing at least one instruction stored in the memory 1590.

Through the communicator 1550, the processor 1580 may request a chat room corresponding to the broadcast content based on the user account and receive chat messages of a first chat room corresponding to the broadcast content from the chat server 3000.

The processor 1580 may display, through the display 1515, the chat messages of the first chat room received together with the broadcast content.

In response to the chat room to which the user account belongs being changed from the first chat room to a second chat room based on the number of chat messages per unit time of the user account transmitted to the chat server 3000 as the chat message of the first chat room, the processor 1580 may receive chat messages of the second chat room from the chat server 3000.

The processor 1580 may display the received chat messages of the second chat room through the display 1515.

The processor 1580 may display a plurality of preset chat messages through the display 1515. Also, in response to receiving a user input for selecting one of the plurality of preset chat messages, the processor 1580 may transmit the selected preset chat message as the chat message of the first chat room to the chat server 3000 through the communicator 1550.

In response to receiving an authentication code corresponding to the first chat room from the chat server 3000 through the communicator 1550, the processor 1580 may display the authentication code through the display 1515.

In response to receiving a user input for selecting one of the users belonging to the second chat room as an interesting person through the user input unit 1560, the processor 1580 may transmit a request for setting the selected user as an interesting person to the chat server 3000 through the communicator 1550.

Together with a list of a plurality of chat rooms corresponding to the broadcast content, the processor 1580 may display the keyword and the chat rate of each of the plurality of chat rooms through the display 1515. Also, in response to receiving a user input for selecting a chat room in a list of a plurality chat rooms through the user input unit 1560, the processor 1580 may transmit a request for changing the chat room of the user account from the second chat room to the selected chat room to the chat server 3000 through the communicator 1550.

In response to receiving a list of friends corresponding to the user account from the chat server 3000 through the communicator 1550 and receiving a user input for selecting one of the friends through the user input unit 1560, the processor 1580 may transmit a request for changing the chat room of the user account from the second chat room to the chat room of the selected friend to the chat server 3000 through the communicator 1550.

In response to receiving a user input for opening a dedicated chat room requiring authentication information through the user input unit 1560, the processor 1580 may transmit a request for generating a dedicated chat room requiring authentication information corresponding to the broadcast content to the chat server 3000 through the communicator 1550.

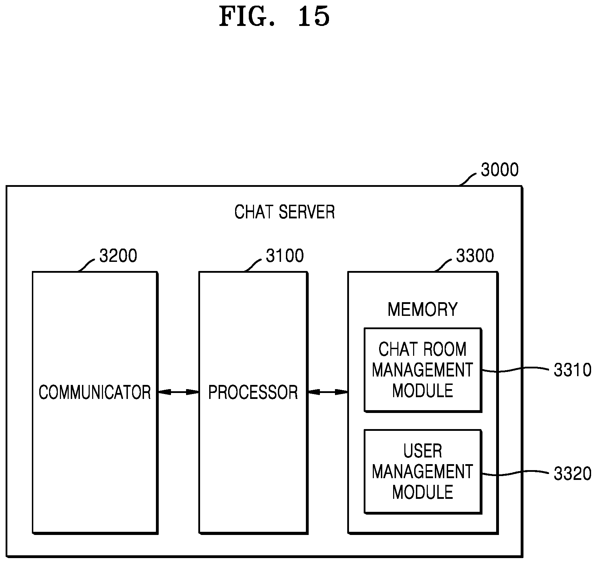

FIG. 15 is a block diagram of a chat server 3000 according to an embodiment of the disclosure.

Referring to FIG. 15, the chat server 3000 may include a processor 3100, a communicator 3200, and a memory 3300.

However, not all of the components illustrated in FIG. 15 are necessary components of the chat server 3000. The chat server 3000 may be implemented by more components than the components illustrated in FIG. 15 or may be implemented by less components than the components illustrated in FIG. 15.

The memory 3300 may store one or more instructions. Also, the memory 3300 may store data and information necessary for the operation of the chat server 3000. Also, the memory 3300 may include a chat room management module 3310 and a user management module 3320. The chat room management module 3310 and the user management module 3320 may be software modules implemented by being executed by the processor 3100.

The chat room management module 3310 may generate, delete, divide, and merge chat rooms. Also, the chat room management module 3310 may store or delete user account information and device address information of the users belonging to the chat room.

The user management module 3320 may store user account information and device address information of the users registered in the chat service. Also, the user management module 3320 may calculate and store the average chat rate of the users.

The processor 3100 may control an overall operation of the chat server 3000 and a signal flow between the internal components of the chat server 3000 and perform a data processing function. The processor 3100 may execute an operating system (OS) and various programs stored in the memory 3300.

The communicator 3200 may connect the chat server 3000 to an external device (e.g., the display apparatus 1000 or another device) under the control by the processor 3100. The processor 3100 may transmit/receive data (chat messages) or information (e.g., chat room information) to/from an external device connected through the communicator 3200.

The communicator 3200 may include, but is not limited to, a wired Ethernet.

The processor 3100 may determine to divide the first chat room into a plurality of chat rooms including the second chat room. Also, the processor 3100 may change the chat room of the user from the first chat room to the second chat room.

Also, the processor 3100 may determine to merge the first chat room into the second chat room.

Also, the processor 3100 may determine a suitable chat rate range of the first chat room based on at least one of the genre of the broadcast content or the main viewing age for the broadcast content. Also, the processor 3100 may determine the number of a plurality of chat rooms to be divided by calculating the chat rate of the first chat room and comparing the calculated chat rate of the first chat room with the suitable chat rate range of the first chat room.

Also, through the communicator 3200, the processor 3100 may receive a request for the chat room from the display apparatus 1000 and transmit information of the chat room and chat messages of the chat room to the display apparatus 1000.

The machine-readable storage medium may be provided in the form of a non-transitory storage medium. Here, the term "non-transitory storage medium" may mean that the storage medium is a tangible device and does not include signals (e.g., electromagnetic waves), and may mean that data may be semi-permanently or temporarily stored in the storage medium. For example, the "non-transitory storage medium" may include a buffer in which data is temporarily stored.

According to an embodiment of the disclosure, the method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a machine-readable storage medium such as a manufacturer's chat server, a chat server 3000 of an application store, or a memory of a relay chat server 3000.

## Claims

1. A display apparatus(1000) comprising:
a display screen(1515);
a memory(1590) storing one or more instructions; and
at least one processor(1580) configured to execute the one or more instructions stored in the memory(1590) to:
receive video content,
in response to requesting a chat room corresponding to the video content based on a user account, receive chat messages of a first chat room corresponding to the video content from a chat server(3000),
display the received chat messages of the first chat room together with the video content on the display screen(1515),
in response to a chat room to which the user account belongs being changed from the first chat room to a second chat room based on an amount of chat messages of the user account transmitted to the chat server(3000), receive chat messages of the second chat room from the chat server(3000), and
display the received chat messages of the second chat room through the display screen(1515).

2. The display apparatus of claim 1, wherein the display apparatus further comprises a communicator that is connected with the chat server.

3. The display apparatus of any one of claim 1 and claim 2, wherein the display apparatus further comprises a broadcast receiver that receives the video content.

4. The display apparatus of any one of claims 1 to 3, wherein in response to determining by the chat server that the first chat room is divided into a plurality of chat rooms comprising the second chat room, the chat room to which the user account belongs is changed from the first chat room to the second chat room.

5. The display apparatus of any one of claims 1 to 4, wherein in response to determining by the chat server that the first chat room is merged into the second chat room, the chat room to which the user account belongs is changed from the first chat room to the second chat room.

6. The display apparatus of claim 4, wherein a number of the plurality of chat rooms is determined by determining a suitable chat rate range of the first chat room based on at least one of a genre of the video content or a main viewing age for the video content and comparing a chat rate of the first chat room with the suitable chat rate range of the first chat room.

7. The display apparatus of any one of claims 1 to 6, wherein the at least one processor is further configured to:
display a plurality of preset chat messages through the display screen, and
in response to receiving a user's input for selecting one of the plurality of preset chat messages, transmit the selected one of the plurality of preset chat messages as a chat message of the first chat room to the chat server.

8. The display apparatus of any one of claims 1 to 7, wherein the at least one processor is further configured to, in response to receiving an authentication code corresponding to the first chat room from the chat server, display the authentication code through the display screen,
wherein a mobile device receives the authentication code as an input by a user on the mobile device, transmits the authentication code to the chat server, and receives chat messages of the first chat room from the chat server.

9. The display apparatus of any one of claims 1 to 8, wherein the at least one processor is further configured to:
in response to receiving a user's input for selecting one of users belonging to the second chat room as an interesting person, transmit a request for setting the selected user as an interesting person to the chat server,
wherein, in response to the user selected as the interesting person being moved from the second chat room to a third chat room, a chat room of the user account is changed from the second chat room to the third chat room.

10. The display apparatus of any one of claims 1 to 9, wherein the at least one processor is further configured to:
display, together with a list of a plurality of chat rooms corresponding to the video content, a chat rate and a keyword of each of the plurality of chat rooms through the display screen, and
in response to receiving a user's input for selecting one of the plurality of chat rooms, transmit a request, to the chat server, for changing a chat room of the user account from the second chat room to the selected chat room.

11. The display apparatus of any one of claims 1 to 10, wherein the at least one processor is further configured to receive a list of friends corresponding to the user account from the chat server, and in response to receiving a user's input for selecting one of the friends, transmit a request for changing a chat room of the user account from the second chat room to a chat room having the selected friend's account to the chat server.

12. The display apparatus of any one of claims 1 to 11, wherein the at least one processor is further configured to, in response to receiving a user's input for opening a dedicated chat room requiring authentication information, transmit a request for generating the dedicated chat room requiring the authentication information corresponding to the video content to the chat server.

13. A method of providing a chat service for video content, the method comprising:
receiving video content;
in response to requesting a chat room corresponding to the video content from a chat server based on a user account, receiving chat messages of a first chat room corresponding to the video content from the chat server;
displaying the received chat messages of the first chat room together with the video content;
in response to a chat room to which the user account belongs being changed from the first chat room to a second chat room based on an amount of chat messages of the user account transmitted to the chat server, receiving chat messages of the second chat room from the chat server; and
displaying the received chat messages of the second chat room.

14. The method of claim 13, wherein in response to determining by the chat server that the first chat room is divided into a plurality of chat rooms comprising the second chat room, the chat room to which the user account belongs is changed from the first chat room to the second chat room.

15. A method performed by a chat server, comprising:
determining a chat rate range of a first chat room based on information of video content and information of users of the first chat room;
adding a second chat room based on a comparison of a chat rate of the first chat room with the determined chat rate range;
determining to distribute users of the first chat room to the second chat room based on the chat rate of the first chat room; and
moving the users of the first chat room to the second chat room.
